# EUROPEAN PATENT SPECIFICATION

(11) **EP 3 338 932 B1**
(45) Date of publication and mention of the grant of the patent: **30.08.2023**
(21) Application number: 17204854.8
(22) Date of filing: 01.12.2017
(51) Int. Cl.: B23D 61/18, F16D 11/02

(54) **SYTEM FOR JOINING TWO ENDS OF A METAL CUTTING LINE FOR CUTTING MACHINES FOR STONE, WOOD, AND METAL PRODUCTS AND THE LIKE**
SYSTEM ZUR VERBINDUNG VON ZWEI ENDEN EINES METALLSCHNEIDSEILS FÜR SCHNEIDMASCHINEN FÜR STEIN-, HOLZ- UND METALLPRODUKTE UND DERGLEICHEN
SYSTÈME D'ASSEMBLAGE DES DEUX EXTRÉMITÉS D'UNE LIGNE DE COUPE MÉTALLIQUE POUR MACHINES À DÉCOUPER DE LA PIERRE, DU BOIS ET DES PRODUITS MÉTALLIQUES ET ANALOGUES

(30) Priority: 01.12.2016 IT 201600122276
(43) Date of publication of application: 27.06.2018
(73) Proprietor: Dazzini S.R.L., 54033 Carrara (MS) (IT)
(72) Inventor: PUCCI, Vittorio, 54100 Massa (MS) (IT)
(74) Representative: Mannucci, Michele

(56) References cited:
- EP-A1- 0 373 100
- WO-A1-2012/174577
- AU-B2- 408 408
- US-A- 3 033 600

## Description

### Technical Field

The present invention relates to the field of machines for cutting stone, wood, and metal products; in particular, the object of the invention is a system for joining two ends of a metal cutting line for cutting machines for stone, wood, and metal products and the like. A further object of the invention is a method for joining through the above mentioned system, as well as a device for joining the two ends.

### State of the Art

As it is well known, some machines for cutting marble and stone materials use cutting elements constituted by cutting lines, called "diamond wires", provided with cutting bodies (bodies made of synthetic diamond) along the extension thereof),

Document EP 0 373 100 A1 discloses a system according to the preamble of claim 1.

The cutting lines are closed like a loop. During the cutting steps, the lines are moved along the extension thereof and made translate along the desired cutting plane, thus meeting the stone material to be cut and cutting it along the plane.

To loop the cutting line devices are well known for joining the ends of the line, comprising a bushing provided with a through hole, inside which the ends of the line can be inserted from opposite sides. The bushing is then pressed at opposite sides on the outer surface, thus squashing it and blocking the two ends of the cutting line there inside.

The same joining device can be used when a line is broken and it is necessary to repair the damage by joining the two ends.

This kind of joining has a quiet low failure limit with respect to the failure limit of the line, and therefore it does not allow to increase the shear stresses associated with the line; for example, it does not allow to increase the cutting speed, and therefore the productivity, of the cutting machines as this would reduce the operators' safety due to the increased risk of breakage of the diamond joined cutting line.

### Object and summary of the invention

The object of the invention is to provide a system, a device and a method for joining two ends of a metal cutting line of cutting machines for stone, wood and metal products and the like, allowing to have increased breaking strength with respect to the known systems, thus increasing the operators' safety.

According to a first aspect, this and other objects, that will be better explained below, are achieved by means of a system for joining two ends of a metal cutting line for cutting machines for stone, wood, and similar products according to claim 1.

It is understood that according to the present invention the joining system relates to the ends of a same cutting line, or segments of a previously joined cutting line that shall be joined together in a new area for instance following a breakage of the line.

The at least one friction element has greater hardness than both the hardness of the bushing part with which it is in contact and the hardness of the line.

The bushing has at least two parts, one more external part and one more internal part, with reference to the distance from the axis of the hole; the more internal part being made of a material of lower hardness than the hardness of the more external part; preferably the more internal part being made of a material of lower hardness than the hardness of the cutting line.

The bushing preferably comprises at least two bushes, one first outer bush, which forms the more external part of the bushing and is provided with a first through hole, and a second inner bush, which is housed in the first through hole, forms the more internal part, and is provided with a second through hole defining the housing hole for housing the two ends of the cutting line, the second inner bush being made of a material of lower hardness than the hardness of the first outer bush; the two bushes being integrally coupled.

The hardness of the first outer bush is comprised, for example, between 180 HB and 250 HB (Brinell scale).

The hardness of the second inner bush is comprised, for example, between 120 HB and 160 HB (Brinell scale).

The outer bush is made, for example, of steel ST35-4, whilst the inner bush is made, for example, of steel with added lead 11 SMnPb37. The inner bush is made, for example, of mild steel, whilst the outer bush is made of stronger steel with high yield strength.

According to further examples, the bushing is made with the internal part and the external part having different hardness, the bushing being a single piece of material whose hardness varies along the thickness, i.e. greater hardness towards the outer surface and lower hardness on the hole inner surface. This can be done, for example, by treating a bushing, made of a single metal, with thermal or chemical treatments (or a combination thereof) providing different hardnesses along the thickness.

For example, the hardness of the first external part of the bushing, measured on the outer surface thereof, is comprised between 180 HB and 250 HB.

For example, the hardness of the second internal part of the bushing, measured on the surface of the hole, is comprised between 120 HB and 160 HB.

According to preferred embodiments, the at least one friction element comprises at least one sintered body interposed between the line and the bushing inner surface.

The sintered body preferably comprises silicon carbide or tungsten.

The sintered body is preferably in the form of bush, fastened inside the metal bushing.

The bush forming the sintered body preferably comprises an abutment shoulder where the ends of the line abut.

The bush forming the sintered body is preferably formed by two adjacent coaxial half-bushes.

According to preferred embodiments, the metal bushing where the at least one sintered friction element is inserted and fastened is substantially comprised of a single block made of the same material having homogeneous hardness in the thickness.

In further embodiments, the at least one friction element is embodied by powder or grains interposed between the line and the bushing inner surface.

The hardness of the friction element is preferably comprised between 1100 HV (Vickers hardness, equal to 1000 HB Brinell hardness) and 2100 HV (Vickers hardness, equal to 1875 HB Brinell hardness).

The hardness of the part of bushing with which the at least one friction element is in contact is preferably comprised between 120 HB and 160 HB (Brinell hardness).

The powder or grains are preferably directly integrated on the inner surface of the bushing hole, so as to form a single body with the bushing, so that the bushing is ready for use when it is necessary to join two ends of a cutting line. In this case, it is sufficient to insert the two ends into the bushing and press the bushing at opposite sides, thus deforming it so that the hole walls are pressed against the ends of the line.

The powder or grains preferably have an average size comprised between 20 and 140 Mesh.

The powder or grains are preferably silicon carbide or tungsten carbide or the like.

The hardness of the powder or grains is preferably comprised between 1100 HV (Vickers hardness = 1000 HB Brinell hardness ) and 2100 HV (1875 HB).

In other embodiments, the powder or grains are not directly integrated in the bushing (for example integrated in the hole surface) but they are arranged on the ends of the line, or inside the bushing hole, if necessary with the aid of a bonding substance, before the step of deforming the busing on the line. Therefore, to join the ends, it is necessary to distribute the powder or grains on the ends of the line and/or inside the bushing hole and then to deform the bushing so that the hole walls are pressed against the line ends.

It may be desirable to have a kit comprising a joining device provided with a bushing as described above and a substance comprising the powder or grains to be associated with the bushing hole and/or with the line ends before inserting the line ends inside the holes.

In this case again, the powder or grains preferably have an average size comprised between 20 and 140 Mesh. The average size is calculated, for example, according to the Mesh standard.

The powder or grains are preferably silicon carbide or tungsten carbide.

According to a different aspect, the at least one friction element interposed between the surface of the bushing hole and the line does not have greater hardness and is not in powder or grains; indeed, it is the most internal part of the bushing where the hole is defined for housing the line ends, and has lower hardness than the most external part , so that the most internal part can partially adapt itself around the ends when the bushing is pressed against the line.

Therefore, according to some embodiments, embodiments not covered by the invention, the bushing structure is that described in the variant described above with the exception of the presence of powder or grains. In other words, the bushing is a device for joining two ends of a cutting metal line for cutting machines for stone and wood products and the like, having at least two parts, one more external part, with reference to the distance from the axis of the hole, and one more internal part, i.e. the part where the through hole is defined; adequately, the more internal part is made of a material of lower hardness than the hardness of the more external part; preferably the more internal part is made of a material of lower hardness than the hardness of the cutting line. The bushing may be preferably comprised of two bushes, one first outer bush, which forms the more external part of the bushing, is made of a material of greater hardness and is provided with a first through hole, and a second inner bush, which is housed in the first through hole, forms the more internal part, and is provided with a second through hole defining the housing hole for housing the two ends of the cutting line, the second inner bush being made of a material of lower hardness; the two bushes are adequately integrally joined together, for example welded, glued or joined through interference, both hot or cold, so as to form a single indivisible piece.

The bushing is made with the inner part and the outer part having different hardness, the bushing being a single piece of material whose hardness varies along the thickness, i.e. greater hardness towards the outer surface and lower hardness on the hole inner surface. This can be done, for example, by treating a bushing, made of a single metal, with thermal or chemical treatments (or a combination thereof) providing different hardnesses along the thickness.

In all the previous embodiments, with or without powder or grains, the wall of the hole of the bushing where the ends of the cutting line can be inserted may have one or more grooves, for example a helical groove, i.e. a thread.

According to a further aspect, the invention relates to a method for joining two ends of a metal cutting line for cutting machines for stone, wood or similar products according to claim 15.

### Brief description of the drawings

Further characteristics and advantages of the invention will be more apparent from the description of some preferred, although not exclusive, embodiments, illustrated by way of non-limiting example in the attached tables of drawings, wherein:
figure 1 is a schematic axial section of a first example of a joining system according to the invention, where the ends are inserted in the joining device formed by a bushing already provided with grains increasing the joining friction, the device being not yet deformed;
figure 2 is a schematic axial section of a second example of a joining system according to the invention, where the ends are inserted in the joining device formed by a bushing already provided with grains increasing the joining friction, the device being not yet deformed;
figure 3 is a schematic axial section of a third example of a joining system according to the invention, where the ends are outside the joining device formed by a bushing as in figure 1, and where the grains are provided, increasing the joining friction, to be inserted in the device with the line ends, so as to form a joining kit;
figure 4 is a schematic axial section of a fourth example of a joining system according to the invention, where the ends are shown outside the the joining device formed by a bushing as in figure 2, and where grains are provided increasing the joining friction, that shall be inserted into the device with the line ends, to form a joining kit;
figure 5 is a schematic axial section of a fifth example of a joining system according to the invention, where the ends are inserted in the joining device formed by a bushing as in figure 1, without grains, the device being not yet deformed;
figure 6 is a schematic axial section of a sixth example of a joining system according to the invention, where the ends are inserted in the joining device formed by a bushing as in figure 2 without grains, the device being not yet deformed;
figure 7 is a schematic axial section of a variant o the joining system of figure 1;
figure 8 is a schematic axial section of a variant of the joining system of figure 2;
figure 9 is a sintered bushing to be used as friction element in joining systems as in figures 7 and 8.

### Detailed description of an embodiment of the invention

With reference to the previously mentioned figures, a system for joining two ends of a metal cutting line for cutting machines for stone, wood and metal products and the like according to the invention is indicated as a whole with number 10.
the metal cutting line is indicated as a whole with number 11 and the two ends thereof are indicated with 11A and 11B. The two ends to be joined may also be the ends of two distinct segments of the cutting line, that shall be joined in a new area, for example following a line breakage.

The system comprises a joining system comprising a preferably cylindrical bushing 12 having a through hole 13, preferably coaxial with the axis of the bushing.

in examples not shown in the figures, grooves may be provided on the wall of the hole 13. A helical groove, i.e. a thread inside the hole, may be provided.

The bushing is formed by two parts, one first external part 14 (with reference to the distance from the axis of the hole) comprising the outer surface of the bushing, and a second internal part 15, comprising the inner surface of the hole 13. The terms "external/internal" refer to the distance from the hole axis, i.e. the external part is a part farther from the hole axis than the internal part.

In this example, the first external part 14 is formed by a first outer bush, indicated with the same reference number 14 and having a first through hole 14A, whilst the second internal part 15 is formed by a second inner bush indicated with the same number 15, housed inside the first through hole 14A and provided with a second through hole 13 housing the ends 11A and 11B of the cutting line. The two bushes have the same axial length, and, when they are coupled together, the outer surface of the second inner bush 15 is in contact with the surface of the first hole 14A of the first outer bush 14.

The two bushes 14 15 are integrally joined together, so as to adequately realize a single indivisible piece that cannot be divided in use, for example welded, brazed, joined through interference, both hot or cold, or joined in any other manner.

Adequately, the two bushes are made of metal, and in particular the first outer bush 14 is made of steel with high yield strength, for example ST 35-4 steel, whilst the second inner bush 15 is made for example of mild steel, for example 11SMnPb37. The hardness of the outer bush 14 is greater than the hardness of the inner bush 15. For example, the hardness of the first outer bush is equal to about 210 HB and the hardness of the second inner bush is equal to about 140 HB.

In this way, when the bushing 12 is pressed i.e. deformed, in a known way, against the outer surface 12A in direction of the hole axis, with the ends 11A and 11B of the cutting line inserted in the hole 13, the most internal part of the bushing, i.e. the inner bush 15, is deformed and adheres to the line ends, in particular at least partially in the spaces defined between the strands of the ends of the cutting line 11.

In this example, on the inner surface 13A of the hole 13 a friction element 16 is provided that, in the preferred embodiments, is in the form of powder or grains having for example an average size comprised between 20 and 140 Mesh. The powder (or gains) is made of a material of greater hardness than both the hardness of the part of bushing with which it is in contact (the inner surface of the hole 13, i.e. the surface of the second bush 15) and, in this example, the hardness of the cutting line 11.

The powder or grains is for example made of silicon carbide or tungsten or diamond, and has a hardness equal to 1900 HV (corresponding to 9 in Mohs scale), whilst the cutting line 11 is made of carbon steel with hardness of about 530 HB.

The powder or grains significantly increase the holding effect of the bushing 12 pressed against the ends of the line 11.

In this example, the grains or powder 16 are directly integrated on the inner surface of the hole 13, so as to realize a single body with the bushing 12, so that the bushing is already ready for use when it is necessary to join two ends of the cutting line 11. In this case it is sufficient to insert the two ends 11A and 11B in the bushing and press it from opposite sides, thus deforming it so that the walls of the hole are pressed against the ends of the line, the powder or grains increasing the friction between the bushing and the line.

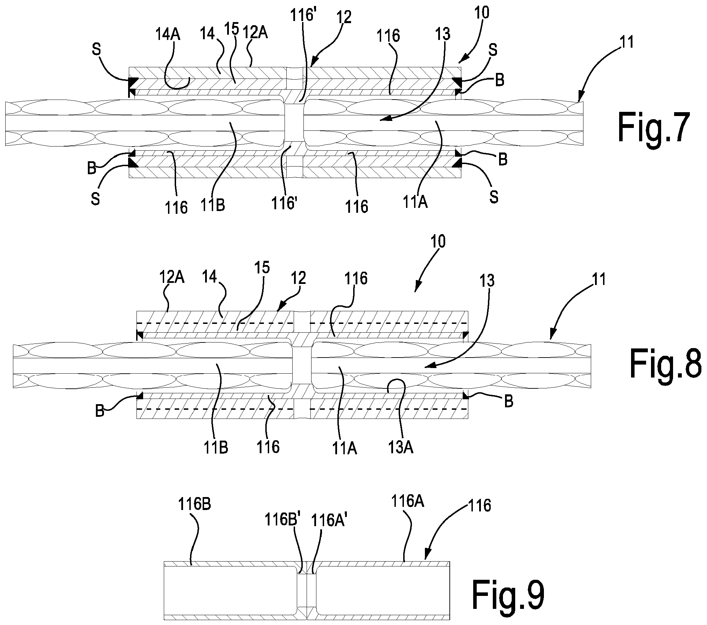

In a variant of the example above, shown in figure 7, the friction element, indicated in this case by the reference number 116, is in the form of a sintered body, for example a third sintered bush, i.e. formed by sintered powder or grains forming a perforated friction body (i.e. defining the hole 13 of the bushing 12) where the ends of the line are inserted. The third bush is formed for example by sintering powder or grains having average size comprised between 20 and 140 Mesh. The powder (or gains) is made of a material of greater hardness than both the hardness of the part of bushing with which it is in contact (the surface of the second bush 15) and, in this example, the hardness of the cutting line 11.

The friction element comprises for example silicon carbide or tungsten or diamond (if necessary together with other bonding metals, such as one of the following: tin, zinc, copper, silver or other), and has hardness equal to 1900 HV (corresponding to 9 Mohs scale), whilst the cutting line 11 is made of carbon steel and has hardness equal to about 530 HB.

For example, the friction element in form of a third sintered bush 116 is inserted in the hole of the second bush 15 and fastened to this latter for instance by brazing B, welding, or joined through interference of the diameters third bush 16/hole second bush 15.

This friction element in the form of a sintered perforated body significantly increases the holding effect of the bushing 12 pressed against the ends of the line 11.

In this example, in the centerline of the third sintered bush 116 a shoulder 116' is provided where the line ends 11A and 11B abut, that projects towards the center of the hole 13.

In a further variant, the third sintered bush 116 is formed for example by two half-bushes 116A and 116B (the bush 116A-116B is shown in figure 9), coaxial, for example substantially equal, and touching in correspondence of the half-shoulders 116A'-116B'. The half-bushes 116A, 116B are fastened, for example, to the first bushing through welding, brazing or diameter interference.

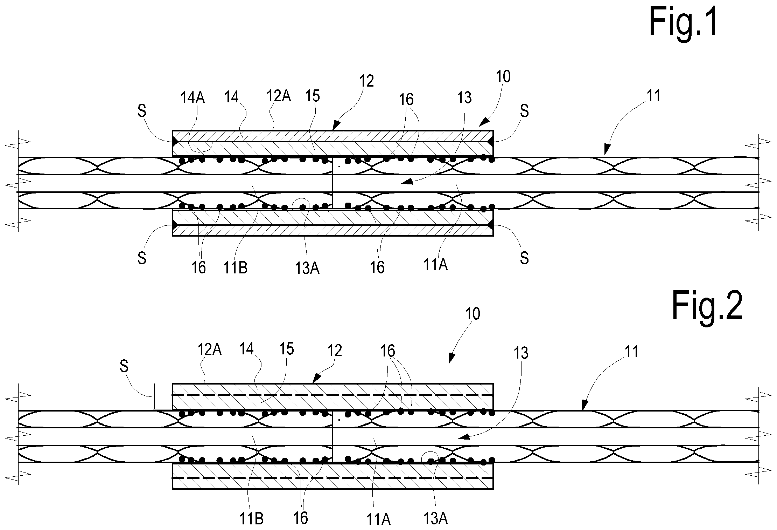

In a further example, shown in figure 2, the bushing 12 is made in a single piece (and not by two bushes joined together after production, as in the previous case), for example a single block, with the internal part 14 and the external part 15 having different hardness, i.e. the hardness of the material of the bushing is variable along the thickness "s", and has greater hardness towards the outer surface 12A and lower hardness on the inner surface 13A of the hole 13 (the difference between first part 14 and second part 15 is fictitious, that is that there cannot be evident discontinuity in the hardness of the two parts, being different the hardness measured on the outer surface of the bushing with respect to the hardness measured on the inner surface of the hole 13); for this reason, the separation between the two parts 14 and 15 is indicated by a broken line.

To achieve the difference in hardness on the "single block" bushing it is necessary to treat chemically or thermally (or a combination of thermal and chemical treatments) a bushing made of a single metal, thus having different hardness along the thickness thereof.

The friction element having greater hardness than the internal part 15 can be also made of different material and in different shape than those listed. For example, the material can be in the form of chips, or fibers, or tubular mesh, or sheets, film etcetera to be interposed between the line and the bushing, or integrated on the surface of the bushing hole.

Figure 8 shows a variant of the example above, where the friction element, indicated with 116, is in the form of a sintered body, for example a third sintered bush, i.e. formed by sintered grains or powder forming a perforated friction body where the ends of the line are inserted, similarly to what already described above with reference to the example of figure 7. The third bush 116 is made for example by sintering powder or grains having average size comprised between 20 and 140 Mesh. The powder (or gains) is made of a material of greater hardness than both the hardness of the part of bushing with which it is in contact and, in this example, the hardness of the cutting line 11.

The friction element comprises for example silicon carbide or tungsten or diamond (if necessary together with other bonding metals, such as one of the following: tin, zinc, copper, silver or other), and has hardness equal to 1900 HV (corresponding to 9 Mohs scale), whilst the cutting line 11 is made of carbon steel and has hardness equal to about 530 HB.

For example, the friction element in form of a third sintered bush 116 is inserted in the hole of the bush and fastened to this hole for instance by brazing B, welding, shrinking-on, or joined through interference of the diameters third bush 16/hole second bush 15.

In a variant of the bushing 12 of the example above, not shown in the figures but substantially identical to that of figure 8 without the broken line separating the two parts 14 and 15, the bushing 12 is made in a body having homogeneous hardness and therefore the first part and the second part of the bushing have the same hardness (the bushing 12 is substantially comprised of a single-block body of the same material having homogeneous hardness along the thickness thereof), that is lower than the hardness of the friction element (third bush 116). For example, the hardness of the bushing is equal to the hardness of the first part 14 of the previous example, whilst the hardness of the third bush 116 is that described for the previous cases.

In this case again, in a variant of the example above, in the centerline of the third sintered bush 116 a shoulder 116' is provided where the line ends 11A and 11B abut, the shoulder projecting towards the center of the hole 13.

In this case again, as in the case of figure 9, the third sintered bush 116 may be formed by two half-bushes 116A and 116B, coaxial, for example substantially equal, touching each other in correspondence of the two half-shoulders 116A'-116B'.

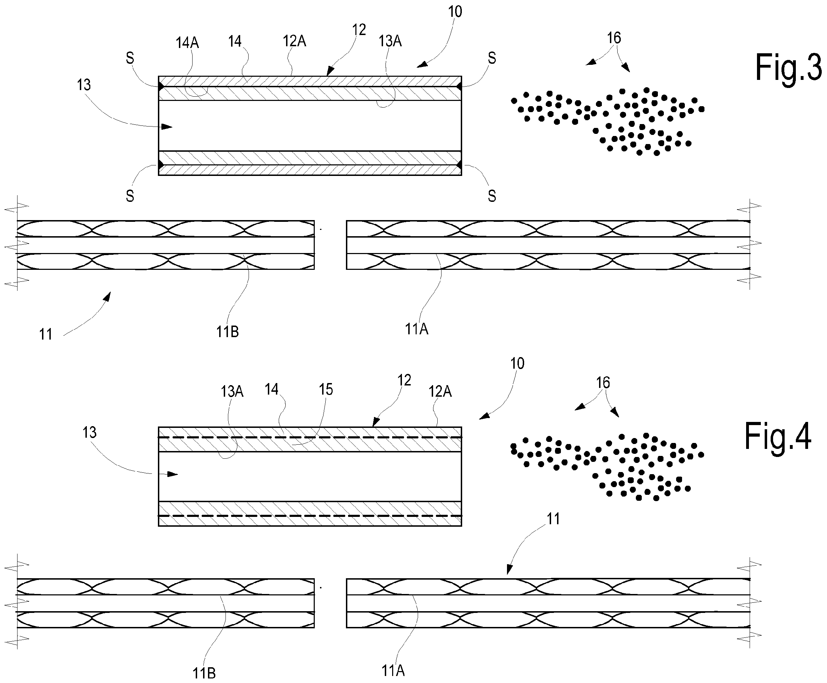

In a further example, shown in figure 3 (a version where the bushing is formed by two bushes, as described above with reference to figure 1), and in figure 4 (a version where the bushing is single-block, as described above with reference to figure 2), in the joining system 10 the powder or grains are not directly integrated in the bushing (for instance on the surface of the hole) but they are arranged on the line ends 11A and 11B or inside the hole 13 of the bushing 12, if necessary with the aid of a bonding substance, before deforming the bushing on the line. Therefore, to join the two ends, the powder or grains are distributed on the ends of the line 11 and/or inside the bushing hole 13 and then the bushing is deformed so that the hole walls are pressed against the line ends.

As already mentioned, in examples not shown in the figures grooves may be provided on the walls of the hole 13. A helical groove, i.e. a thread inside the hole, may be provided. The friction element, i.e. the grains or powder, may be arranged inside the thread so that, when the bushing is deformed, the thread is pressed against the line and the powder or grains increase the friction between the bushing and the line.

The invention also relates to a method comprising the steps of a) arranging powder or grains 16, made of a material with greater hardness with respect to the hardness of the inner surface of the hole 13 and of the line 11, inside the hole or on at least one of the two ends, and preferably on both the ends, b) inserting the two ends inside the hole, and c) pressing the bushing outer surface, thus deforming the bushing so that the inner surface of the hole is deformed and pressed against the two ends of the cutting line 11.

Therefore, the device formed by the bushing 12 and the substance comprising the powder (or grains) 16 form a joining kit ready for use.

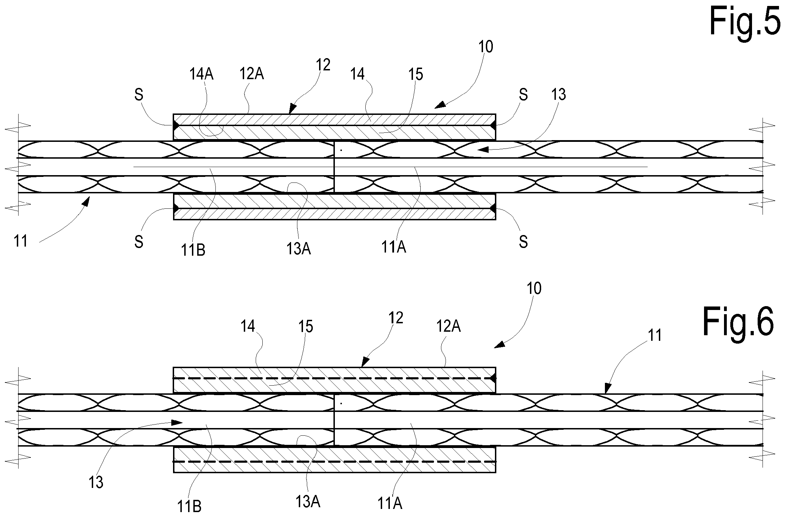

According to a further aspect not covered by the invention, aspect, as shown in figures 5 and 6, the friction element interposed between the surface of the hole 13 of the bushing 12 and the line 11 does not have greater hardness and is not a powder (or grains), but it is the same most internal part of the bushing 12 that goes into contact with the line, i.e. the surface 13A of the hole 13 where the hole 13 is defined. Practically, the structure of the joining device/bushing is the same as that illustrated in the previous examples, with the exception of the presence of powder (grains). As in those examples, the internal part 15 of the bushing (now defining the only friction element) has lower hardness than the external part 14 so that the internal part 15 adapts itself at least partially around the ends when the bushing is pressed on the line. Figure 5 relates shows a bushing formed by two bushes (as in figure 1 or 3), whilst figure 6 shows a single-block bushing (like in figure 2 or 4).

Adequately, the bushing 12, in the various examples described, may be provided with one or more calibrated stress raisers. For example, with reference to the case of figure 8 and 9 (but the same may be also provided in the other examples, where a sintered friction element is not provided), a hole 130 is provided, for example cylindrical, passing through the flanks of the bushing 12, with the exception of the third bush 116. The size of the hole are calibrated to allow the joining device to break when a desired load is applied to the line (obviously lower than the breaking load of the line) so as to allow a prediction of the line break in a clearly defined position of the joining device, thus preventing the device from detaching from the line and from being projected at high speed in the environment around the cutting machine. Therefore, the term "calibrated" means a hole whose dimensions are projected in advance based on the dimensions and the material of the bushing and the load to be applied to the cutting line.

Obviously, in other embodiments more calibrated holes may be provided on the same bushing, in the more convenient positions, according to the project needs.

In other variants, the stress raiser hole may be a hole passing also through the third bush 116, i.e. the friction element.

Preferably, at least one stress raiser is provided in the centerline of the bushing 12. It is understood that the element may have any shape. For example, instead of the hole, a stress raiser groove may be provided, for example a round groove, i.e. a reduction in the thickness of the bushing in the area destined to controlled break.

Therefore, in view of the above description, it is clearly apparent that the new joining system has, with respect to the conventional joining system, greater load capacity. This is possible thanks to two innovative elements:
- the hard friction element (for example in grains or powder, but other embodiments are also possible) during the pressing step wedges itself in the strands of the line at one side at wedges itself in the inner surface of the bushing (if not yet integrated in it) thus increasing the contact section and creating new cutting surfaces and increasing tear strength;
- the bushing, that in conventional system had the same hardness in the whole thickness, now has a mild internal part, whilst the external part has greater hardness than the internal one. In pressing step, the internal part can be deformed thus surrounding the strands of the line, the external part has the function of co-acting for bearing the loads increasing the load capacity of the bushing.

In examples not shown in the figures, grooves may be provided on the wall of the hole 13. A helical groove, i.e. a thread inside the hole, may be provided. Any reference numerals in the appended claims are provided for the sole purpose of facilitating the reading thereof in the light of the description herein before and the accompanying drawings and do not in any way limit the scope of protection.

## Claims

1. A system (10) for joining two ends of a metal cutting line (11) for cutting machines for stone, wood, and metal products and the like, comprising a metal bushing (12) provided with a through hole (13), inside which the ends (11A, 11B) of the line (11) are to be inserted and which is suitable to deform inwards to block said ends, further comprising at least one friction element (16, 116) interposed between the hole (13) surface of said bushing (12) and said line (11), wherein said at least one friction element (16, 116) has greater hardness than the hardness of the bushing part with which it is in contact, **characterised in that** said bushing (12) has at least two parts, one more external part (14) and one more internal part (15), with reference to the distance from the axis of the hole, said more internal part (15) being made of a material of lower hardness than the hardness of said more external part (14).

2. Joining system according to claim 1, wherein said at least one friction element (16, 116) has greater hardness than the hardness of said line (11).

3. Joining system according to one or more of the previous claims, wherein said more internal part (15) is made of a material of lower hardness than the hardness of the cutting line (11).

4. Joining system according to claim 1, wherein said bushing (12) comprises at least two bushes (14, 15), one first outer bush (14), which forms said more external part of the bushing and is provided with a first through hole (14A), and a second inner bush (15), which is housed in said first through hole (14A), forms said more internal part, and is provided with a second through hole (13) defining said housing hole for housing the two ends of the cutting line (11), said second inner bush (15) being made of a material of lower hardness than the hardness of said first outer bush (14); said two bushes being integrally coupled.

5. Joining system according to one or more claims from 1 to 3, wherein said bushing is made with said internal (15) part and said external part (14) having different hardness, the bushing being a single piece of material whose hardness varies along the thickness, i.e. greater hardness towards the outer surface and lower hardness on the hole inner surface.

6. Joining system according to one or more of the previous claims, wherein said at least one friction element (116) comprises at least one sintered body interposed between the line (11) and the bushing inner surface.

7. Joining system according to claim 6, wherein said sintered body (116) comprises silicon carbide or tungsten.

8. Joining system according to claim 6 or 7, wherein said sintered body (116) is in the form of bush, fastened inside said metal bushing (12).

9. Joining system according to claim 8, wherein said bush (116) forming the sintered body comprises an abutment shoulder (116') where the ends of the line abut.

10. Joining system according to claim 8 or 9, wherein said bush forming the sintered body (116) is formed by two adjacent coaxial half-bushes (116A, 116B).

11. Joining system according to one or more of claims 1 to 5, wherein said at least one friction element (16) comprises powder or grains interposed between the line (11) and the bushing inner surface.

12. Joining system according to claim 11, wherein said powder or grains have an average size comprised between 20 and 140 Mesh.

13. Joining system according to claim 11 or 12, wherein said powder or grains are silicon carbide or tungsten.

14. Joining system according to one or more of claims 11 to 13, wherein the wall of said hole (13) of the bushing (12) where the ends of the cutting line can be inserted has one or more grooves, preferably a helical groove, i.e. a thread.

15. A method for joining two ends of a metal cutting line (11) for cutting machines for stone, wood or similar products, comprising a joining device comprising a metal bushing (12) provided with a through hole (13) inside which the ends of the line can be inserted; wherein said bushing (12) has at least two parts, one more external part (14) and one more internal part (15), with reference to the distance from the axis of the hole; said more internal part (15) being made of a material of lower hardness than the hardness of said more external part (14), said method comprising the steps of:
- arranging at least one friction element, preferably in the form of powder or grains, made of a material of greater hardness than the hardness of the hole inner surface and preferably also than that of the cutting line, inside the hole or on at least one of the two ends, preferably on both them,
- inserting the two ends inside the hole,
- squashing the bushing by pressing on the outer surface, thus deforming the bushing so that the hole inner surface deforms, thus pressing on the two ends of the cutting line.

## Patentansprüche

1. System (10) zum Verbinden zweier Enden eines Metall-Schneidseils (11) für Schneidmaschinen für Stein, Holz und Metallprodukte und dergleichen mit einer Metallhülse (12) mit einem Durchgangsloch (13), innerhalb dessen die Enden (11A, 11B) des Seils (11) einzufügen sind und die geeignet ist, sich nach innen zu der formieren, um die Enden zu blockieren, mit ferner mindestens einem Reibungselement (16, 116), das zwischen der Oberfläche des Lochs (13) der Hülse (12) und dem Seil (11) eingefügt ist, wobei das mindestens eine Reibungselement (16, 116) eine höhere Härte als die Härte des Hülsenteils aufweist, mit dem es in Kontakt steht, **dadurch gekennzeichnet, dass** die Hülse (12) mindestens zwei Teile aufweist , einen eher äußeren Teil (14) und einen eher inneren Teil (15) mit Bezug auf den Abstand von der Achse des Lochs, wobei der eher innere Teil (15) aus einem Material mit geringerer Härte als die Härte des eher äußeren Teils (14) gefertigt ist.

2. Verbindungsystem nach Anspruch 1, wobei das mindestens eine Reibungselement (16, 116) eine höhere Härte als die Härte des Seils (11) aufweist.

3. Verbindungsystem nach einem oder mehreren der vorstehenden Ansprüche, wobei der eher innere Teil (15) aus einem Material mit einer geringeren Härte als die Härte des Schneidseils (11) gefertigt ist.

4. Verbindungsystem nach Anspruch 1, wobei die Hülse (12) mindestens zwei Buchsen (14, 15) aufweist, eine erste äußere Buchse (14), die den eher äußeren Teil der Hülse bildet und mit einem ersten Durchgangsloch (14A) versehen ist, und einer zweiten inneren Buchse (15), die in dem ersten Durchgangsloch (14A) aufgenommen ist, den eher inneren Teil bildet und mit einer zweiten Durchgangsloch (13) versehen ist, das das Aufnahmeloch zur Aufnahme der beiden Enden des Schneidseils (11) definiert, wobei die zweite innere Buchse (15) aus einem Material mit geringerer Härte als die Härte der ersten Buchse (14) gefertigt ist, wobei die beiden Buchsen integral gekoppelt sind.

5. Verbindungsystem nach einem oder mehreren der Ansprüche 1 bis 3, wobei die Hülse mit dem inneren (15) Teil und dem äußeren Teil (14) mit unterschiedlichen Härten gefertigt ist, wobei die Hülse ein einzelnes Materialstück ist, dessen Härte entlang der Dicke variiert, d. h. größere Härte zu der äußeren Oberfläche hin und geringere Härte zu der inneren Oberfläche des Lochs.

6. Verbindungsystem nach einem oder mehreren der vorstehenden Ansprüche, wobei das mindestens eine Reibungselement (116) mindestens einen gesinterten Körper aufweist, der zwischen das Seil (11) und der inneren Oberfläche der Hülse eingefügt ist.

7. Verbindungsystem nach Anspruch 6, wobei der gesinterte Körper (116) Siliziumcarbid oder Wolfram aufweist.

8. Verbindungsystem nach Anspruch 6 oder 7, wobei der gesinterte Körper (116) in der Form einer Buchse ist, die innerhalb der Metallhülse (12) befestigt ist.

9. Verbindungsystem nach Anspruch 8, wobei die Buchse (116), die den gesinterten Körper bildet, eine Anschlagschulter (116') aufweist, an der die Enden des Seils anschlagen.

10. Verbindungssystem nach Anspruch 8 oder 9, wobei die Buchse, die den gesinterten Körper (116) bildet durch zwei benachbarte koaxiale Halbbuchsen (116A, 116B) gebildet ist.

11. Verbindungsystem nach einem oder mehreren der Ansprüche 1 bis 5, wobei das mindestens eine Reibungselement (16) Pulver oder Körner aufweist, die zwischen das Seil (11) und die innere Oberfläche der Hülse eingefügt sind.

12. Verbindungsystem nach Anspruch 11, wobei das Pulver oder die Körner eine mittlere Größe aufweisen, die zwischen 20 und 140 Mesh beträgt.

13. Verbindungsystem nach Anspruch 11 oder 12, wobei das Pulver oder die Körner Siliziumcarbid oder Wolfram sind.

14. Verbindungsystem nach einem oder mehreren der Ansprüche 1 bis 13, wobei die Wandung des Lochs (13) der Hülse (12) wo die Enden des Schneidseils eingefügt werden können, eine oder mehrere Nuten aufweist, vorzugsweise eine Wendelnut, d. h. ein Gewinde.

15. Verfahren zum Verbinden zweier Enden eines Metall-Schneidseils (11 für Schneidmaschinen für Stein, Holz oder ähnliche Produkte mit einer Verbindungsvorrichtung mit einer Metallhülse (12), die mit einem Durchgangsloch (13) versehen ist, in das die Enden des Seils eingefügt werden können, wobei die Hülse (12) mindestens zwei Teile aufweist, ein eher äußeren Teil (14) und ein eher inneren Teil (15) mit Bezug auf den Abstand von der Achse des Lochs, wobei der eher innere Teil (15) aus einem Material mit geringerer Härte als die Härte des eher äußeren Teils (14) gefertigt ist, wobei das Verfahren die Schritte aufweist:
- Anordnen von mindestens einem Reibungselement, vorzugsweise in Form von Pulver oder Körnern aus einem Material mit größerer Härte als die Härte der inneren Oberfläche des Lochs und vorzugsweise auch als die des Schneidseils innerhalb des Lochs auf mindestens einem der beiden Enden, vorzugsweise auf beiden von Ihnen,
- Einbringen der beiden Enden in das Loch,
- Verklemmen der Hülse durch Pressen auf die äußere Oberfläche, wodurch die Hülse verformt wird, sodass sich die Oberfläche des Lochs deformiert, wodurch auf die beiden Enden des Schneidseils gepresst wird.

## Revendications

1. Un système (10) pour joindre deux extrémités d'un câble de coupe métallique (11) pour des machines de coupe pour de la pierre, du bois, des produits métalliques et similaires, comprenant une douille métallique (12) prévue avec un trou traversant (13), à l'intérieur duquel les extrémités (11A, 11B) du câble (11) doivent être introduites et qui est apte à se déformer vers l'intérieur pour bloquer lesdites extrémités, comprenant en outre au moins un élément de friction (16, 116) interposé entre la surface (13) du trou de ladite douille (12) et ledit câble (11), dans lequel le(s)dit(s) élément(s) de friction (16, 116) a une dureté supérieure à la dureté de la partie de la douille avec laquelle il est en contact, **caractérisé en ce que** ladite douille (12) a au moins deux parties, une partie plus externe (14) et une partie plus interne (15), par rapport à la distance depuis l'axe du trou, ladite partie plus interne (15) étant constituée d'un matériau de dureté inférieure à celle de ladite partie plus externe (14).

2. Système de jonction selon la revendication 1, dans lequel le(s)dit(s) élément(s) de friction (16, 116) a une dureté supérieure à celle dudit câble (11).

3. Système de jonction selon l'une ou plusieurs des revendications précédentes, dans lequel ladite partie plus interne (15) est constituée d'un matériau de dureté inférieure à celle du câble de coupe (11).

4. Système de jonction selon la revendication 1, dans lequel ladite douille (12) comprend au moins deux manchons (14, 15), un premier manchon externe (14) qui forme ladite partie plus externe de la douille et est prévu avec un premier trou traversant (14A) et un deuxième manchon interne (15), qui est logé dans ledit premier trou traversant (14A), forme ladite partie plus interne et est prévu avec un deuxième trou traversant (13) formant ledit trou de logement pour loger les deux extrémités du câble de coupe (11), ledit deuxième manchon interne (15) étant constitué d'un matériau de dureté inférieure à celle dudit premier manchon externe (14) ; lesdits deux manchons étant couplés solidairement l'un à l'autre.

5. Système de jonction selon l'une ou plusieurs des revendications 1 à 3, dans lequel ladite douille est réalisée avec ladite partie interne (15) et ladite partie externe (14) ayant des duretés différentes, la douille étant une unique pièce en un matériau dont la dureté varie le long de l'épaisseur, à savoir, une dureté plus élevée vers la surface externe et une dureté inférieure sur la surface interne du trou.

6. Le système de jonction selon l'une ou plusieurs des revendications précédentes, dans lequel le(s)dit(s) élément(s) de friction (116) comprend/comprennent au moins un corps fritté interposé entre le câble (11) et la surface interne de la douille.

7. Système de jonction selon la revendication 6, dans lequel ledit corps fritté (116) comprend du carbure de silicium ou du tungstène.

8. Système de jonction selon la revendication 6 ou 7, dans lequel ledit corps fritté (116) est en forme de manchon, fixé à l'intérieur de ladite douille métallique (12).

9. Système de jonction selon la revendication 8, dans lequel ledit manchon (116) formant le corps fritté comprend un épaulement formant butée (116') contre lequel les extrémités du câble viennent en butée.

10. Système de jonction selon la revendication 8 ou 9, dans lequel ledit manchon formant le corps fritté (116) est formée par deux demi-manchons (116A, 116B) adjacents et coaxiaux.

11. Système de jonction selon l'une ou plusieurs des revendications 1 à 5, le(s)dit(s) élément(s) de friction (16) comprend de la poudre ou des grains interposés entre le câble (11) et la surface interne de la douille.

12. Système de jonction selon la revendication 11, dans lequel ladite poudre ou lesdits grains ont une dimension moyenne comprise entre 20 et 140 Mesh.

13. Système de jonction selon la revendication 11 ou 12, dans lequel ladite poudre ou lesdits grains sont en carbure de silicium ou en tungstène.

14. Système de jonction selon l'une ou plusieurs des revendications 11 à 13, dans lequel la paroi dudit trou (13) de la douille (12) où les extrémités du câble de coupe peuvent être introduites a une ou plusieurs gorges, de préférence une gorge hélicoïdale, c'est-à-dire un taraudage.

15. Un procédé pour joindre deux extrémités d'un câble de coupe métallique (11) pour des machines de coupe pour des pierres, du bois ou des produits similaires, comprenant un dispositif de jonction comprenant une douille métallique (12) prévue avec un trou traversant (13) à l'intérieur duquel les extrémités du câble peuvent être introduites ; dans lequel ladite douille (12) a au moins deux parties, une partie plus externe (14) et une partie plus interne (15), par rapport à la distance depuis l'axe du trou ; ladite partie plus interne (15) étant constituée d'un matériau de dureté inférieure à celle de ladite partie plus externe (14), ce procédé comprenant les étapes consistant à :
- agencer au moins un élément de friction, de préférence sous forme de poudre ou de grains, constitué d'un matériau de dureté supérieure à celle de la surface interne du trou et de préférence aussi à celle du câble de coupe, à l'intérieur du trou ou sur au moins une des deux extrémités, de préférence sur les deux,
- introduire les deux extrémités à l'intérieur du trou,
- écraser la douille en appuyant sur la surface externe, déformant ainsi la douille de sorte que le surface interne du trou se déforme, pressant ainsi sur les deux extrémités du câble de coupe.
